# EUROPEAN PATENT SPECIFICATION

(11) **EP 3 977 722 B1**
(45) Date of publication and mention of the grant of the patent: **09.04.2025**
(21) Application number: 20742884.8
(22) Date of filing: 25.05.2020
(51) Int. Cl.: H04N 7/18, B60R 1/00, G01S 13/931, G06T 1/00, H04N 23/51, H04N 23/68

(54) **ELECTRIC VEHICLE WITH AUTONOMOUS DRIVE**
ELEKTRISCHES FAHRZEUG MIT AUTONOMEM ANTRIEB
VEHICLE ÉLECTRIQUE À CONDUITE AUTONOME

(30) Priority: 27.05.2019 IT 201900007368
(43) Date of publication of application: 06.04.2022
(73) Proprietor: Interactive Fully Electrical Vehicles S.r.l., 10040 La Loggia (Torino) (IT)
(72) Inventor: PERLO, Pietro, 10040 La Loggia (Torino) (IT); PENSERINI, Davide, 10040 La Loggia (Torino) (IT); GROSSO, Marco, 10040 La Loggia (Torino) (IT); INTROZZI, Riccardo, 10040 La Loggia (Torino) (IT); POZZATO, Sergio, 10040 La Loggia (Torino) (IT); BIASIOTTO, Marco, 10040 La Loggia (Torino) (IT); SABATO, Gioele, 10040 La Loggia (Torino) (IT)
(74) Representative: Buzzi, Notaro & Antonielli d'Oulx S.p.A.
(86) International application number: PCT/IB2020/054938
(87) International publication number: WO 2020/240398

(56) References cited:
- WO-A1-2016/086274
- CN-A- 109 220 227
- US-A1- 2005 029 458
- US-A1- 2019 033 856
- US-A1- 2019 100 147
- KOREATECHDESK EDITOR: "EVAR: Samsung Electronics' spinoff brings an Autonomous Robotic Charger for Electric Vehicles - KoreaTechDesk - Korea's Leading Tech and Startup Media Platform", 22 November 2018 (2018-11-22), XP055666118, Retrieved from the Internet <URL:https://koreatechdesk.com/evar-samsung-electronics-spinoff-brings-an-autonomous-robotic-charger-for-electric-vehicles/> [retrieved on 20200206]

## Description

### Field of the invention

The present invention relates to electric vehicles with autonomous drive, of the type comprising one or more traction wheels and one or more steering wheels, at least one traction electric motor for driving the traction wheels and at least one steering electric motor for driving steering of the steering wheels, a supply battery pack, a detection system for detecting the environment surrounding the vehicle and an electronic control system for controlling said at least one traction electric motor and said at least one steering electric motor on basis of signals from said detection system.

In the present description, and in the following claims, the expression "vehicle with autonomous drive" is used to cover both the case of a road vehicle of any type, in particular a car, and the case of an autonomous mobile robot, for example for transporting pieces, products or components in an industrial facility, or for domestic use.

### Prior art

In the field of a road vehicles with autonomous drive, significant developments have been made since some years. A common criteria to describe the level of autonomy of a road vehicle is that based on a classification from 0 to 5 of the "Society of Automotive Engineering" (SAE). Modern cars equipped with devices such as a cruise control, lane warning or emergency self-braking are classified at level 1. Autonomous vehicles of level 2 can contain from 15 to 17 sensor devices. At level 5 a motor car can be provided with more than 30 additional sensors in order to provide a complete control on driving, substantially without any human intervention. Cars equipped with a device for assistance in the case of traffic jams, in which the assistance device can replace the driver in city areas, at speeds lower than 40 mph (64 Km/h) are considered of level 3. In general, the vehicles at a level between 0 and 3 have increasing characteristics of comfort and safety, but require anyhow that the driver is ready to take action in case of need. A big jump occurs at level 4, with vehicles which can be used in limited areas with no intervention of a human driver. At level 5 of full autonomy a vehicle is able to operate with no human intervention in any environment (urban, suburban, rural, highway and even off-road) at any reasonable speed under any environmental conditions.

In order to detect the surrounding environment, various technologies are used. A first type of sensors is constituted by the so-called "lidars", which make use of a laser technology in order to measure the distance from an object. Lidar sensors perceive the environment which surrounds the vehicle along three dimensions. They ensure detection of obstacles and enable the position of the vehicle to be calculated due to 3D mapping.

The use is also widespread of videocameras for analysing the environment surrounding the vehicle, in particular for detecting road signs and traffic lights. The videocameras are sometimes used in association to electronic controllers which are programmed with algorithms able to classify the obstacles.

In various types of autonomous vehicles which have been proposed in the past there are also largely used antennas for satellite navigation (GNSS) which enable the position of the vehicle to be detected with a precision close to 1 cm.

Radar devices are further used for determining the position and the speed of surrounding objects and for long-distance vision.

Autonomous vehicles are often also provided with odometers in order to evaluate and to confirm the position of the vehicle and its speed, as well as with inertial measurement devices or "Inertial Measurement Units" (IMU) for detecting accelerations and rotations of the vehicle in order to confirm the information on the vehicle position and improve precision.

In support to the sensor network, communications systems are usually used of the V2X type ("Vehicle-to-Everything") which can be classified into V2I devices ("Vehicle-to-Infrastructure"), V2N ("Vehicle-to-Network"), V2V ("Vehicle-to-Vehicle"), V2P ("Vehicle-to-Pedestrian"), V2D ("Vehicle-to-Device") and V2G ("Vehicle-to-Grid").

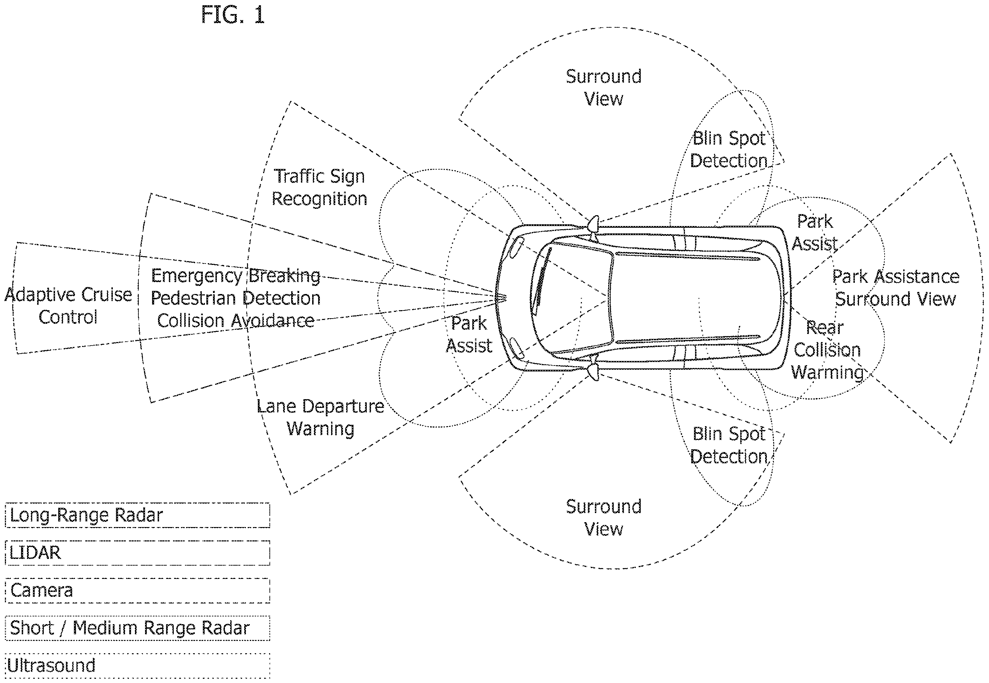

Figure 1 of the annexed drawings shows a plan view of an autonomous vehicle of level 4 and diagrammatically shows the covered areas and the function of a typical suite of sensors provided on a vehicle of this type. The example relates to the case of a vehicle provided both with long-range radar and with short and medium-range radars, as well as with lidar devices, videocameras, and ultra sound sensors. It is clearly apparent that the complexity of these detection systems also causes a greater complexity of the systems for electronically processing the sensor signals. The need of coordinating all the sensor systems consistently also requires the use of a Global Navigation Satellite System (GNSS).

Furthermore, the speed required for processing the navigation information is a function of the vehicle speed. When the speed increases, it is necessary to obtain the required information, to process the information and to take consequential decisions more and more quickly. One of the most relevant problems to be solved is that of providing a suite of sensors which is able of detecting the surrounding environment reliably at a reasonable distance, and to classify the information and to decide the action to be taken. All these operations must be made within a time adapted to enable also a stop of the vehicle if necessary. Supposing for example that the processing platform is able to provide the required outputs within a time of a few milliseconds, this means that at a vehicle speed of 120 km/h, the safety distance to be kept is 250 m. approximately.

Similar problems are encountered also in the field of vehicles with autonomous drive for industrial use. In this field, the invention is directed in particular to the so-called "Autonomous Mobile Robots" or "AMRs". The AMRs are able to perceive the environment in which they move and to take decisions on the basis of what they perceive and of how they have been programmed, for example stopping, starting again and going around obstacles which are encountered along their path.

In the manufacturing industry, AMRs must operate integrated within an environment which comprises both humans and machines.

An important application of the invention relates to an AMR which incorporates a battery on board and which is configured to move close to an electric vehicle of any type, in order to provide a service for recharging the battery on board of the electric vehicle.

It is therefore important that each AMR can cooperate with machines and operators, and has a capability of perceiving the surrounding environment and of interacting with machines and operators in a completely safe manner. Further, this result must be obtained by reducing as much as possible the complexity and the cost both of the sensor suite and of the computing system.

A solution presently widespread on AMRs is that of providing a number of lidar sensors. A lidar sensor has a very high degree of precision with respect to measurement of the distance from an obstacle, but has the drawback of having a field of view which is wide but substantially contained within a plane, typically at the height of the feet of the operators. For this reason, it has a great limitation in its use when a three-dimensional vision of the surrounding environment is desired. Furthermore, the lidar devices render a classification of the obstacles difficult.

Detection system for vehicles are known for example from US 2005/029458 A1 and US 2019/100147 A1. A solution of a service AMR for recharging the battery of an electric vehicle is shown in the article "EVAR: Samsung Electronics' spinoff brings an Autonomous Robotic Charger for Electric Vehicles - KoreaTechDesk - Korea's Leading Tech and Startup Media Platform", KoreaTechDesk Editor, 22.11.2018, XP055666118.

### Object of the invention

It is therefore an object of the present invention that of proposing an autonomous mobile system provided with a detection system which represents an optimum compromise between the need of an accurate detection of the surrounding environment and the need of reducing the complexity of the detection system as much as possible, with a resulting simplification of the system for processing the data produced by the detection system.

A further object of the invention is that of providing an autonomous vehicle provided with a detection system which enables maximum speed in the decision process following the detection operation.

A further object of the invention is that of providing an autonomous vehicle provided with a detection system which does not require the use of antennas for satellite navigation, nor the use of lidar of radar devices.

A further object of the invention is that of providing an autonomous vehicle provided with a detection system which does not require the use of communication systems which are subject to the risk of an electronic jamming.

A further object of the invention is the implementation of an autonomous vehicle provided with an improved system for processing the data from the sensors.

A further object of the invention is that of providing an autonomous vehicle which makes use of improved techniques for information safety.

### Summary of the invention

In view of achieving these and further objects, the invention provides an electric vehicle with autonomous drive having the features of claim 1.

Further preferred and advantageous features of the invention are indicated in the annexed independent claims.

### Detailed description of preferred embodiments

The invention will be described with reference to the annexed drawings, given purely by way of non-limiting example, in which:
- figure 1 is a diagram which shows the covered fields and the functions of a suite of sensors in an autonomous vehicle of level 4, according to the prior art,
- figure 2 is a perspective view of an embodiment of a motor car with autonomous drive, according to the invention,
- figure 2A is a diagram of the vehicle with autonomous drive,
- figure 3 is a perspective view of one of the detection devices forming part of the detection system with which the vehicle according to the invention is provided,
- figures 4, 5 are copies of figures 2 and 3B of EP 0 667 708 A1, whose description is useful for understanding the present invention,
- figure 6 is a perspective view of a further embodiment not forming part of the invention, applied to the case of a vehicle with autonomous drive for industrial use, in particular an AMR, and
- figure 7 shows a variant of figure 6,
- figure 8 shows a perspective view of a further embodiment, not forming part of the invention, constituted by an AMR equipped for providing a service for recharging the batteries of electric vehicles,
- figure 9 shows a hierarchical architecture of the electronic controller system, which can be used in the vehicle according to the invention, with area controllers and a supervisor controller, based on a concept of data processing which divided into areas rather than being centralised, and
- figure 10 shows an implementation of a communication system for communication of the electronic units with each other and/or with remote devices, with a high degree of information safety based on *Quantic Key Distribution* (QKD).

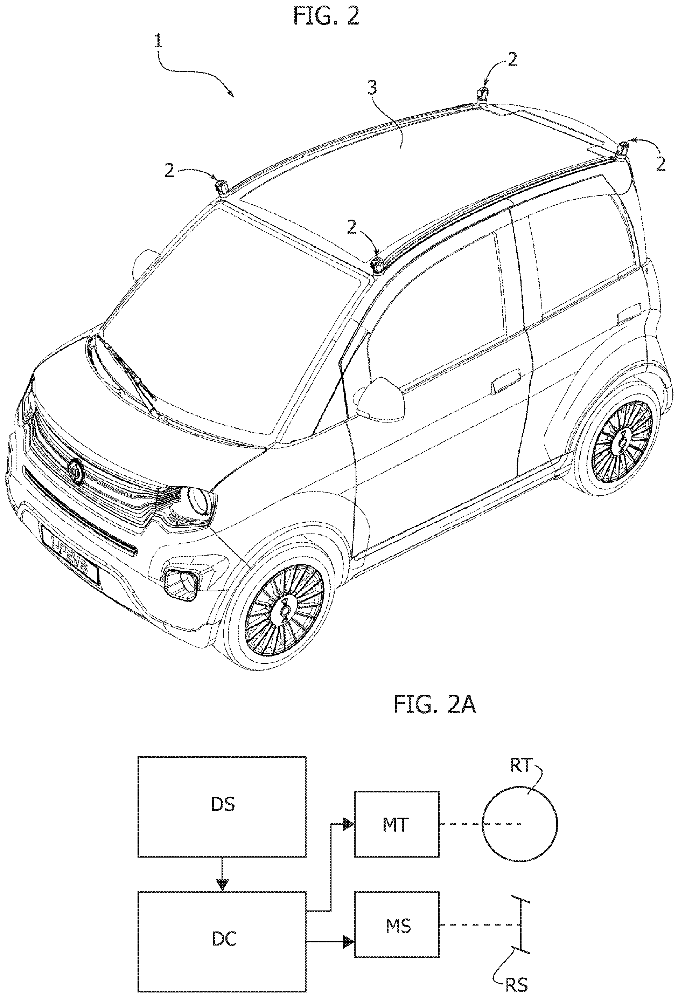

Figure 2 of the annexed drawings shows a first embodiment of the invention, relating to a motor car with an autonomous drive. The example illustrated relates to an electric car of the type which has formed the subject of various patent documents of the same Applicant, such as EP 3 096 965 A2, EP 3 022 108 A1, EP 3 204 249. However, it is to be understood that this vehicle is shown here merely by way of example, and that the invention can be applied to any type of vehicle and with any traction system.

As it will become apparent in the following, the invention is applicable to any electric vehicle with autonomous drive, of the known type comprising one or more traction wheels RT (figure 2A) and one or more steering wheels (RS), at least one traction electric motor MT for driving the traction wheels (RT) and at least one steering electric motor (MS) for driving steering of the steering wheels (RS), a supply battery pack (not shown), a detection system (DS) for detecting the environment surrounding the vehicle and an electronic control system DC for controlling said at least one traction electric motor MT and said at least one steering electric motor MS on the basis of signals from said detection system DS.

In the case of the embodiment shown in figure 2, the vehicle with autonomous drive is provided with a detection system DS constituted substantially by four detection devices 2 mounted at the four corners of the roof 3 of the vehicle. Two detection devices are mounted at the ends of the front side of roof 3, whereas the other two detection devices are mounted at the ends of the rear side of the roof.

In the case of the embodiment shown herein, each detection device 2 is a device of type marketed under trademark "NanoPOP" by the company Israel Aerospace Industries Ltd. This device comprises a base support 200, having a cylindrical shape and an articulated wrist 201 pivotally mounted on the base support 200 around a vertical axis 202. The articulated wrist 201 comprises a cylindrical base 203 pivotally mounted on support 200 and two side wings 204 which extend upwardly from the base 203, at diametrically opposite positions, so as to define therebetween a space in which the body 205 of the detection device is received.

The detection device 205 carries a videocamera 206 provided with a lens 207, and an infrared IR visor provided with a lens 208.

The body 205 of the detector is pivotally mounted between two wings 204 of the articulated wrist 201 so that it can rotate around an axis 209 orthogonal to axis 202.

With reference to figure 2, the detection devices 2 are mounted so that the articulation axis 202 of the articulated wrist is substantially vertical and the articulation axis 209 of the body of the detector is substantially horizontal.

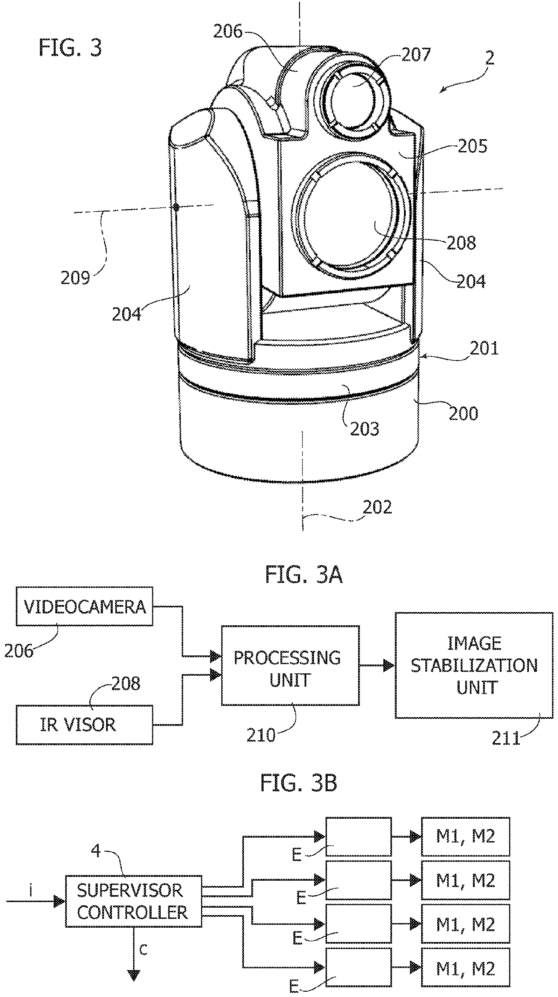

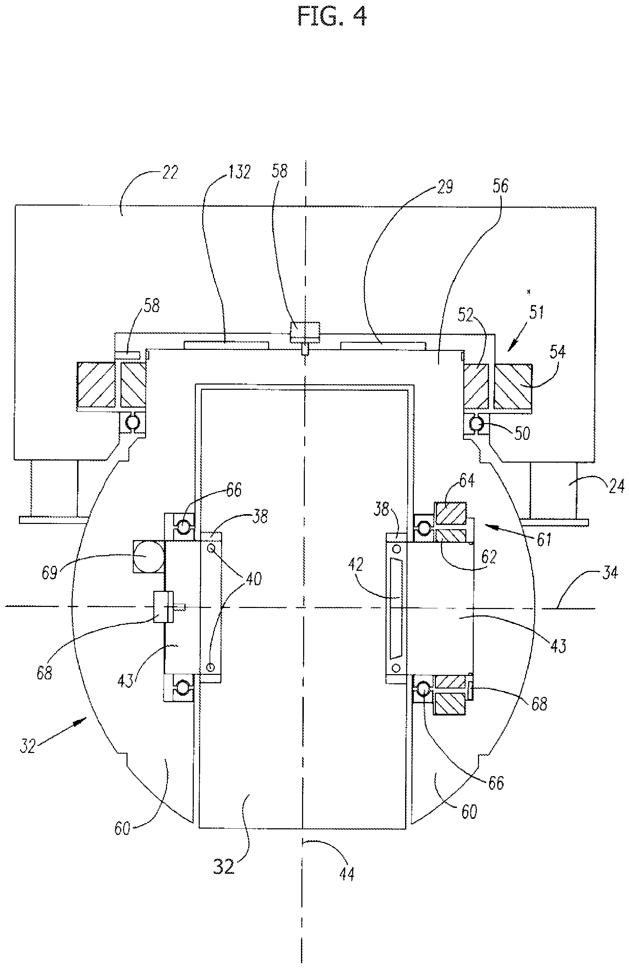

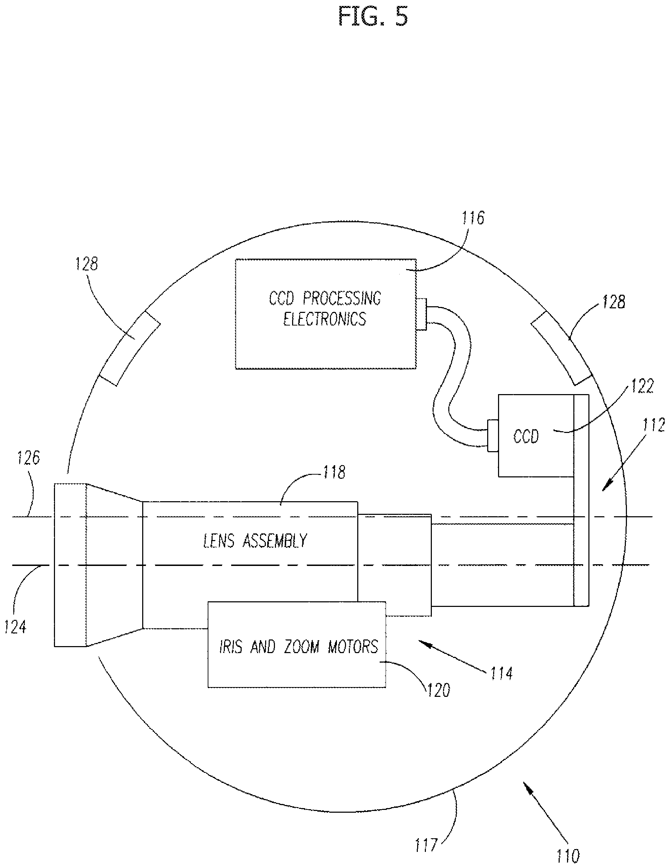

The structure and configuration of the detection device of figure 3 is described in the following with reference to figures 4, 5, which are copies of figures 2 and 3B of document EP 0 667 708 A1. This document shows a device having the general characteristics which are present also in the device shown in figure 3 of the annexed drawings, except for that in document EP 0 667 708 A1, the device has the body of the detector which is mounted below the base support and except for that in the case of a device shown in document EP 0 667 708 A1, the body of the detector is provided only with a videocamera or only with an IR visor, whereas in the case of the detection device of figure 3, used in the present invention, the detection device includes both a videocamera and an IR visor.

In figure 4, the support of the detection device is designated by reference numeral 22 and is functionally equivalent to support 200 of figure 3. The articulated wrist is designated generally with reference numeral 32 and is functionally equivalent to the articulated wrist 101 of figure 3. With reference to figure 4, the wrist 32 is pivotally mounted on support 22 around a vertical axis 44 (corresponding to axis 202 of figure 3). The rotation of the articulated wrist 32 around axis 44 with respect to support 22 is controlled by an electric motor 51 having an annular configuration, with a stator 52 associated to the base portion 56 of the articulated wrist 32, and a stator 54 associated to the support 22. In figure 4, the reference 50 designates a rolling bearing through which the articulated wrist 32 is pivotally supported around axis 44 by support 22. Reference 58 designates an angular position sensor (in particular an encoder) configured for detecting the angular position of the articulated wrist 32 around axis 44 with respect to support 22.

Also in the case of the solution shown in figure 4, the articulated wrist includes two wings 60 extending from the base portion 56 which support the body 32 of the visor device (reference 32 has been added in figure 4). The body 32 of the visor device is functionally equivalent to the body 205 of figure 3. The body 32 of the visor device is supported in rotation by two wings 60 of the articulated wrist 32 around a horizontal axis 34 (corresponding to axis 209 of figure 3) orthogonal to the axis 44. The body 32 has two opposite faces from which two pins 43 project which are supported pivotally around axis 34 by the two wings 60 by means of the rolling bearings 66. The rotation of body 32 of the visor device with respect to the articulated wrist 32 is controlled by an annular electric motor 61, including a rotor 62 associated one of the two pins 43 and a stator 64 associated to one of the two wings 60.

With reference to figure 5, in the case of the embodiments shown herein, the body of the visor device carries a videocamera, including an optical unit 118 and a CCD matrix 122 whose signals are sent to a processing electronic unit 116.

As indicated above, the embodiment shown in figures 4, 5 is known and described in detail in document EP 0 667 708 A1.

This document shows the possibility of providing the body 32 of the visor device alternatively with a daylight vision system of the type shown in figure 5 of the annexed drawings, or with an IR visor. As indicated, in the case of the present invention, instead, the detection device 2 (see figure 3) comprises both the devices, that is both a videocamera 206 and an IR visor 208.

With reference to figure 3A, to each detection device 2 provided in the vehicle according to the invention there is associated a processing electronic unit 210 which receives signals from the videocamera 206 and the IR visor 208, for processing the images. The output signals from the processing unit 210 are sent to an electronic unit 211 for stabilizing the image. Also the use of the image stabilising unit 211 is disclosed in document EP 0 667 708 A1. As explained in this document, the image stabilizing unit is able to stabilize the video image in the case of movements and vibrations transmitted by the vehicle during travel. The configuration of the stabilizing units can be in any case of any known type.

With reference to figure 3B, the detection system with which the vehicle according to the invention is provided comprises a supervisor electronic controller designated by reference 4 which communicates with electronic control circuits E, associated to four detection devices 2 with which the vehicle 1 is provided. Each electronic circuit E controls the operation of two motors M1, M2 associated to each detection device which respectively drive the rotation of the articulated wrist 201 around the vertical axis 202 an the rotation of the body of the visor device 205 around the horizontal axis 209. Naturally, although reference has been made to two electric motors with which the detection device 2 is provided for controlling the two rotations around axes 202, 209, the invention can be implemented by using detection devices in which the two rotations around the above mentioned axes are controlled by any other type of electric actuator.

The supervisor controller 4 and the electronic circuits E are programmed for selectively activating a first operative mode or a second operative mode. In said first operative mode, the articulated wrist of each detection device 2 is rotated around the respective vertical axis, with a reciprocal movement between two end positions, so as to scan a predetermined field of vision in a horizontal plane. Alternatively or in addition to this, in said first operative mode, the body of the detector can be rotated around the above mentioned second horizontal axis, with a reciprocal movement between two end positions, so as to cover a predetermined field of vision in a vertical plane. In the second operative mode, instead, the articulated wrist of each detection device 2 is oriented around its first vertical axis in a predetermined position, whereas the body of the detector is oriented around said second horizontal axis in a predetermined position, so that both the videocamera and the IR visor of each detection device are oriented in a predetermined direction of vision. Both in the first operative mode and in the second operative mode, the system can be configured for covering the surrounding environment horizontally by 360 degrees and vertically through any desired field of vision (for example 45° downwardly and 60° upwardly).

In operation, the detection devices 2 detect the surrounding environment and send the detected information (arrow i in figure 3B) to the supervisor controller 4 which then sends one or more control signals (c) for activating one or more systems on board the vehicle, depending upon the action to be taken. Also depending upon the received information, the supervisor controller 4 coordinates also the electronic circuits E_4--E-4 for orienting and positioning the detection devices 2 as a function of the detected conditions of the surrounding environment.

As clearly apparent from the foregoing description, the detection system of the vehicle according to the invention is extremely less complex than the systems presently under development for vehicles with autonomous drive, but in spite of this it enables a good level of precision in detection of the surrounding environment, due to the advantageous features of the detection devices 2. The lower complexity of the detection system produces also lower complexity of the techniques for processing the detected information, which renders the vehicle able to react more promptly, thus providing autonomous drive performance also at a relatively high speeds. An important advantage of the device according to the invention is constituted by that it is possible to totally eliminate sensors of the lidar or radar type, as well as antennas for satellite navigation systems. Also the use of communication systems of the V2X type between the vehicle and the environment can be avoided, which renders the vehicle according to the invention extremely safe also against the risk of cyber
attacks tending to interfere in these communications.

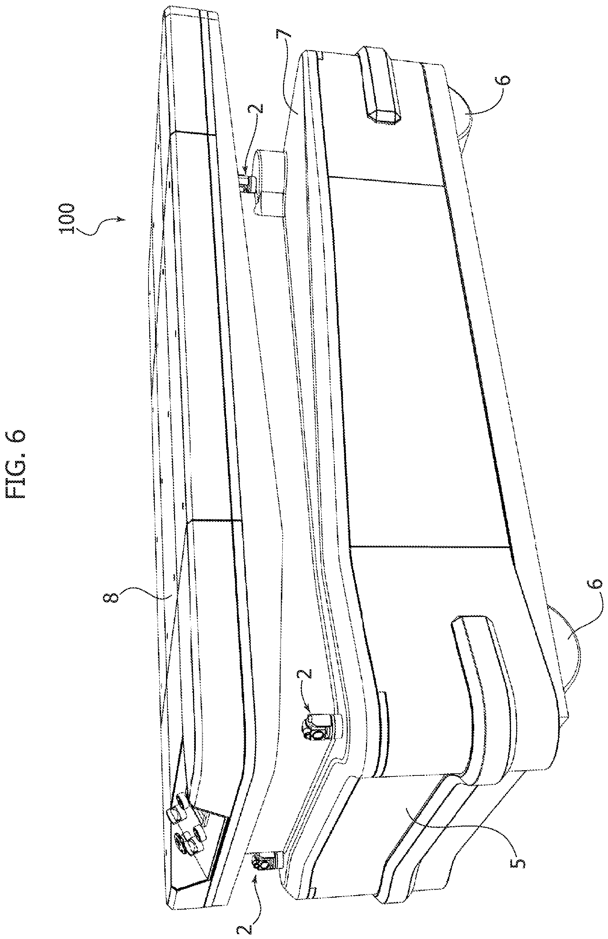

Identical advantages can be obtained also in the case of a vehicle with autonomous drive for transporting pieces, products or components in an industrial environment. Figure 6 shows an example of an autonomous mobile robot or "AMR" including a base structure 5 mounted on wheels 6 having a upper surface 7 on which there are provided three detection devices 2 of the type shown in figure 3. Two detection devices 2 are arranged at one end of the vehicle, whereas the third detection device 2 is arranged at the opposite end. Above the base structure 5 there is mounted a superstructure 8 of any known type, the structure and the configuration of vehicle 100 can be of any known type. Typically, a vehicle of this type comprises motorized an steerable wheels controlled by the electronic drive system of the vehicle on the basis of the information collected by the system for detecting the surrounding environment. Also in this case the detection system for detecting the surrounding environment includes a detection system only constituted by the detection devices 2, without the need of using lidar sensors or radar sensors or ultrasound sensors, as it is instead the case of known AMR vehicle of last generation.

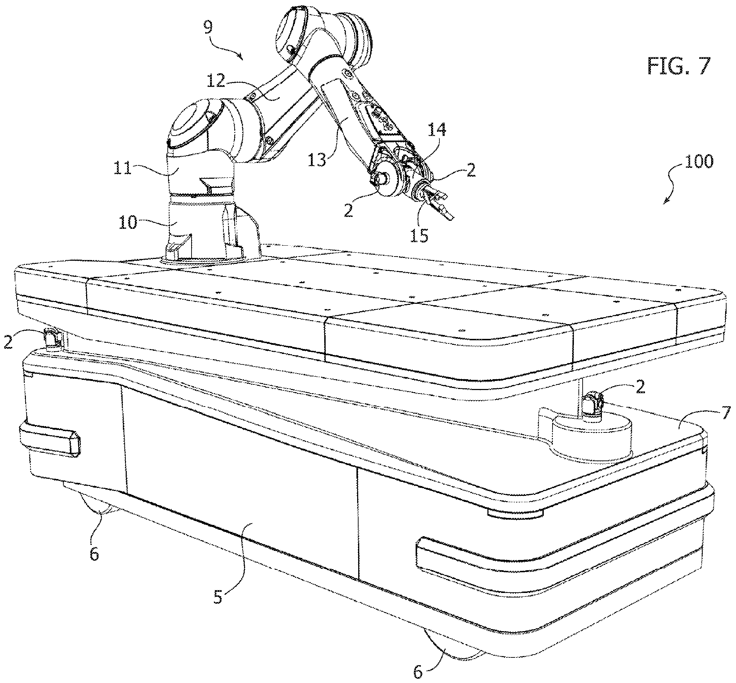

Figure 7 shows a further evolution of the solution of figure 6, in which above the superstructure 8 there is mounted an articulated robot 9 constituted by a chain of mutually articulated elements 10, 11, 12, 13, 14, terminating with a flange 15 for connection of an operating tool of any type, such as a gripper. At the terminal end of the chain of articulated elements constituting robot 9 there are associated, on opposite sides, two detection devices 2 of the above described type with reference to figure 3. Therefore, in the case of the embodiment of figure 7, the detection system of the surrounding environment with which the vehicle is provided does not include only the detection devices which are used as an aid for driving the vehicle 100, but also detection devices which are used for automated drive of the robot 9 during operations for which the robot is programmed.

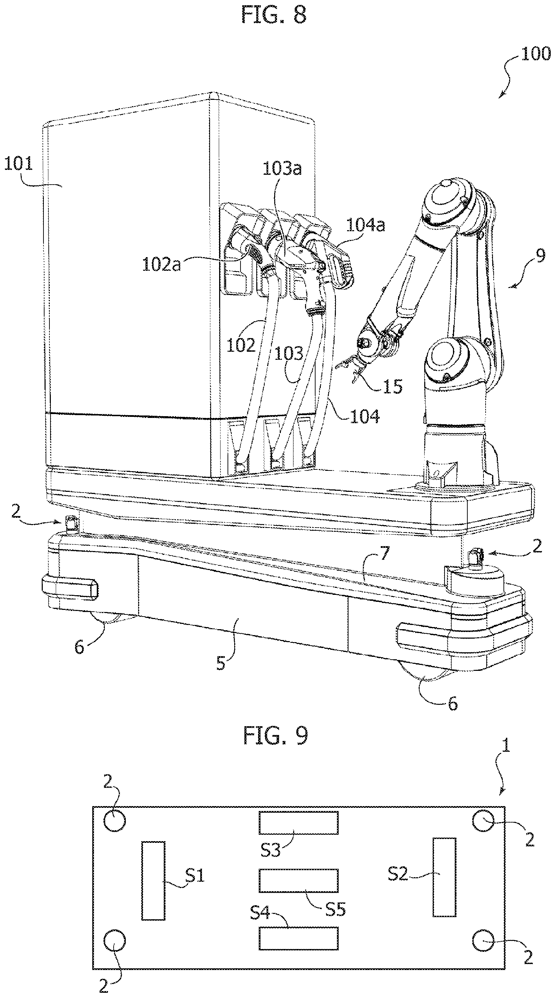

Figure 8 shows an embodiment in which the vehicle of the invention is constituted by an AMR configured for moving close to an electric vehicle in order to provide a service for recharging the battery on the served electric vehicle. In the example of figure 8, the AMR has the same configuration which has been described above with reference to figure 7, but it is clearly apparent that the configuration of the AMR, as well the arrangement of the detection devices 2 can widely vary.

In this embodiment, the AMR 100 is provided with at least one electric energy accumulator 101 (including one or more battery packs) to which there are associated one or more supply cables 102, 103, 104 provided with respective electric connectors 102a, 103a, 104a, for recharging the battery of the electric vehicle served by this vehicle.

Preferably, on board of the AMR a manipulating robot 9 is carried which in the illustrated case is of the same type described with reference to figure 7, even if it is clearly apparent that the robot 9 can be of any known type. The robot 9 is provided with a gripper 15 and is controlled for grasping, with the aid of a gripper 15, one of the supply cables 102, 103, 104 and/or the connector associated thereto, to bring it close to the electric vehicle to be served and to couple the electric connector of the supply cable with the connector of the electric vehicle to be served, for recharging the battery of the served electric vehicle.

Also preferably, the connectors 102a,103a,104a are configured according to different standards and the robot 9 is controlled so as to select the supply cable which is adapted to the standard used in the connector of the electric vehicle to be served. It can be also provided that all the connectors 102a, 103a, 104a are identical and that the robot is controlled for supplying simultaneously the batteries of more electric vehicles, by means of said supply cables. Finally, it is not excluded that the AMR 100 is provided with a single supply cable, for supply the battery of one electric vehicle at a time.

In all the embodiments, a single electronic board can be provided for controlling and coordinating all the detection devices 2, but preferably there is provided a hierarchical architecture of the electronic controllers, with area controllers which each control the detection devices of a respective area of the vehicle and a supervisor controller which controls and coordinates the area controllers. However, in the invention, in which the vehicle is provided with two front detection devices 2 placed at the right and left sides of the vehicle, and two rear detection devices 2 placed at the right and left sides of the vehicle (see the diagram of figure 9) there is provided a front area
electronic controller S1, which controls and coordinates the two front detection devices 2, for processing front vision data, a rear area electronic controller S2, which controls and coordinates the two rear detection devices 2, for processing rear vision data, a right side area electronic controller S3 which controls and coordinates the front right detection device and the rear right detection device, for processing right side vision data, a left side area controller S4, which controls and coordinates the left front detection device and the left rear detection device, for processing left side vision data, and a supervisor electronic controller S5, which controls all the above mentioned front, rear, right side and left side area controllers S1 - S4.

In this manner, each area electronic controller is able to process stereoscopic tri-dimensional vision data.

Preferably, the group of controllers is further configured for providing redundant navigation data based on the analysis of the optical flow detected in the environment surrounding the vehicle, which renders the use of antennas for satellite navigation, or lidar and radar devices, not essential.

According to a further important feature of the invention, a plurality of electronic units located on board of the vehicle with autonomous drive communicate with each other and/or with remote communication devices with the use of an information safety technique based on Quantum Key Distribution (QKD).

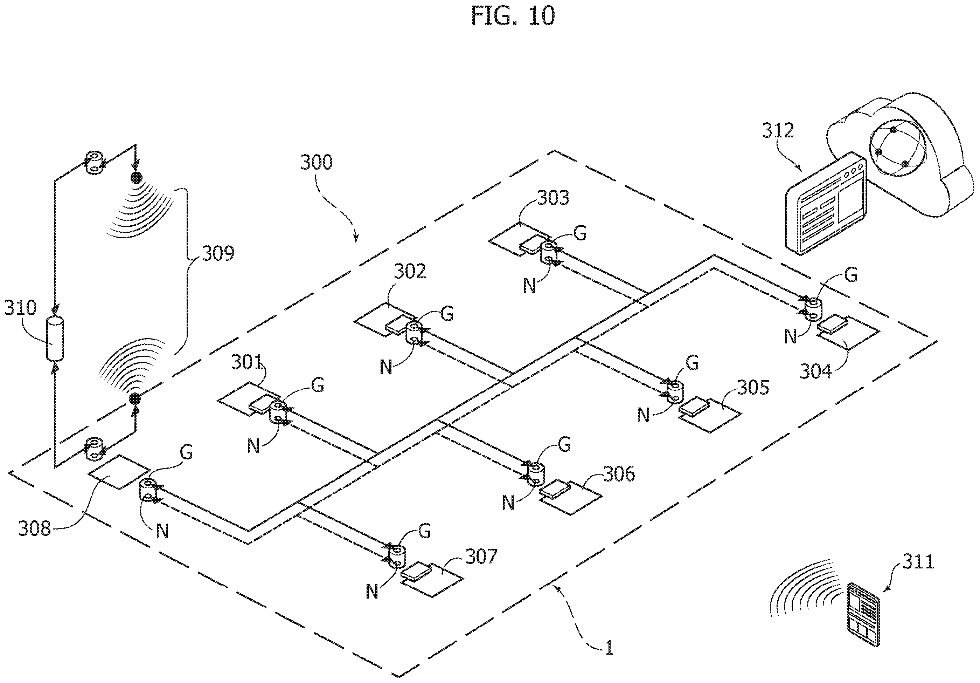

Figure 10 shows a communication network 300 between a plurality of electronic units provided on board the vehicle with autonomous drive 1. For example, the electronic units can include a unit 301 for controlling the vehicle traction motors, a unit 302 for controlling the autonomous drive system, a unit 303 for processing the data from the detection devices 2, a unit 304 for controlling the vehicle lights, a unit 305 for controlling on-board auxiliary services of the vehicle, a unit 306 for controlling the thermal conditioning system on-board the vehicle, a unit 307 for controlling the battery pack of the vehicle and a firewall unit 308 which interfaces a wireless communication system 309 (such as 4G or 5G or Wi-Fi) or a system for cable connection through a connector 310, for the communication with remote devices.

The network 300 comprises a CAN-bus 300A connecting network for connection between knots which correspond to electronic units 301 and a network of optical fibres 300B for communication between gates G associated to the various units 301-308, for quantic key exchange.

The wireless communication system may serve for communicating also with an outer user 311 or with an infotainment 312 system provided with a connection to the Internet.

According to a further aspect of the invention, the autonomous vehicle is provided also with a detection system for detecting the position of the vehicle which comprises devices for inertial measurements and optical flow devices. These devices are used in place of satellite navigation systems.

Naturally, while the principle of the invention remains the same, the details of construction and the embodiments may widely vary with respect to what has been described and illustrated purely by way of example, without departing from the scope of the present invention, as defined in the annexed claims.

## Claims

1. Electric vehicle, with autonomous drive, with one or more traction wheels and one or more steering wheels, at least one traction electric motor for driving the traction wheels and at least one electric steering electric motor for driving steering of the steering wheels, a supply battery pack, a detection system for detecting the environment surrounding the vehicle and an electronic control system for controlling said at least one traction electric motor and said at least one steering electric motor on the basis of signals from said detection system,
wherein:
- the detection system is constituted only by a plurality of detection devices (2), each detection device comprising:
- a support (200) mounted on the vehicle (1; 100)
- an articulated wrist (201) pivotally mounted on said support (200) around a first substantially vertical axis (202),
- a detector body (205), pivotally mounted on said wrist (201) around a second substantially horizontal axis (209) orthogonal to said first axis (202), and carrying both a videocamera (206) for daylight vision and an IR visor (208) for night vision or for vision in conditions of low visibility,
- a first electric motor (51; M1), interposed between said support (200; 22) and said articulated wrist (201; 32) for driving a rotation of the articulated wrist around said first axis (202; 44),
- a second electric motor (61; M2) interposed between said articulated wrist (32; 201) and the body (32, 205) of the detector, for driving a rotation of the body of the detector around said second axis (34; 209),
- a first and a s angular position sensor (58, 68), for detecting the angular position of the articulated wrist (32, 201) and the body (30, 205) of the detector,
- one or more electronic controllers (E) associated to each detection device (2) for receiving an output signal from said first and second angular positions sensors and for actuating said first electric motor (M1) and said second electric motor (M2),
- said electronic controllers (E) being programmed for
- in a first operative mode:
- rotating said articulated wrist (32, 201) around said first vertical axis (44, 202), with a reciprocal movement between two end positions, so as to cover a predetermined field of vision in a horizontal plane and/or rotating said detector body (30; 205) around said second horizontal axis (34, 209), with a reciprocal movement between two end positions, so as to cover a predetermined field of vision in a vertical plane,
- in a second operative mode:
orienting said articulated wrist (32, 201) around said first vertical axis (44; 202) in a predetermined position and/or orienting said detector body (32; 205) around said second horizontal axis (34; 209) in a predetermined position, so as to orient said videocamera (206) and said IR visor (208) in a predetermined direction of vision,
- wherein said one more electronic controllers (E) associated to each detection device further comprise electronic circuits (210, 211) for processing signals emitted from said videocamera (206) and said IR visor (208) and for stabilizing the image obtained on the basis of said signals in the case of movements and/or vibrations imparted by the vehicle during travel,
- wherein the detection system is constituted only by said plurality of detection devices (2), without any lidar sensors, without any radar sensors and without any ultrasound sensors,
- and wherein said detection devices (2) are four in number and include:
- two front detection devices (2) arranged at a front area of the vehicle, respectively on the right and left sides,
- two rear detection devices (2) arranged at a rear area of the vehicle, respectively on the right and left sides,
- said vehicle further comprising:
- a front area electronic controller (S1) which controls the two front detection devices (2) for processing front vision data,
- a rear area electronic controller (S2) which controls the two rear detection devices (2) for processing rear vision data,
- a right side area electronic controller (S3) which controls the right front detection device (2) and the right rear detection device (2),
- a left side area electronic controller (S4), which controls the left front detection device (2) and the left rear detection device (2), for processing left side vision data,
- a supervisor electronic controller (S5) which is configured for controlling said front area controller (S1), said rear area controller (S2), said right side area controller (S3) and said left side area controller (S4),
each area controller (S1-S4) being able to provide stereoscopic three-dimensional vision data, and
wherein the vehicle is configured as an electric motor car with autonomous drive and the four detection devices (2) are provided at the right front, left front, right rear and left rear corners of a vehicle roof (3).

2. Electric vehicle according to claim 1, **characterized in that** the communication of the electronic controllers located on board of the vehicle with autonomous drive, with each other and/or with remote communication devices, makes use of information safety techniques based on Quantum Key Distribution.

3. Electric vehicle according to claim 1, **characterized in that** the group of controllers is configured for providing redundant navigation data based on an analysis of an optical flow detected within the environment surrounding the vehicle.

## Patentansprüche

1. Elektrofahrzeug mit autonomem Antrieb, mit einem oder mehreren Traktionsrädern und einem oder mehreren Lenkrädern, mindestens einem Traktionselektromotor zum Antrieb der Traktionsräder und mindestens einem elektrischen Lenkelektromotor zum Antreiben einer Lenkung der Lenkräder, einem Versorgungsbatteriepaket, einem Detektionssystem zur Detektion der das Fahrzeug umgebenden Umgebung und einem elektronischen Steuerungssystem zur Steuerung des mindestens einen Traktionselektromotors und des mindestens einen Lenkelektromotors auf der Basis von Signalen des Detektionssystems,
wobei:
- das Detektionssystem nur aus einer Vielzahl von Detektionsvorrichtungen (2) besteht, wobei jede Detektionsvorrichtung umfasst:
- einen an dem Fahrzeug (1; 100) angebrachten Träger (200),
- einen Gelenkarm (201), der schwenkbar um eine erste, im Wesentlichen vertikale, Achse (202) an dem Träger (200) angebracht ist,
- einen Detektorkörper (205), der schwenkbar um eine zweite, im Wesentlichen horizontale und zu der ersten Achse (202) orthogonale, Achse (209) an dem Gelenkarm (201) angebracht ist und sowohl eine Videokamera (206) für eine Tageslichtsicht als auch einen IR-Visor (208) für eine Nachtsicht oder für eine Sicht bei schlechten Lichtverhältnissen trägt,
- einen ersten Elektromotor (51; M1), der zwischen dem Träger (200; 22) und dem Gelenkarm (201; 32) eingefügt ist, um eine Rotation des Gelenkarms um die erste Achse (202; 44) anzutreiben,
- einen zweiten Elektromotor (61; M2), der zwischen dem Gelenkarm (32; 201) und dem Körper (32, 205) des Detektors angeordnet ist, um eine Rotation des Körpers des Detektors um die zweite Achse (34; 209) anzutreiben,
- einen ersten und einen zweiten Winkelpositionssensor (58, 68) zur Detektion der Winkelposition des Gelenkarms (32, 201) und des Körpers (30, 205) des Detektors,
- einen oder mehrere, jeder Detektionsvorrichtung (2) zugeordnete, elektronische Steuerungen (E) zum Empfangen eines Ausgangssignals von dem ersten und dem zweiten Winkelpositionssensor und zum Betätigen des ersten Elektromotors (M1) und des zweiten Elektromotors (M2),
- wobei die elektronischen Steuerungen (E) programmiert sind:
- in einem ersten Betriebsmodus:
- den Gelenkarm (32, 201) um die erste vertikale Achse (44, 202) mit einer Hin- und Herbewegung zwischen zwei Endpositionen zu rotieren, um ein vorgegebenes Sichtfeld in einer horizontalen Ebene abzudecken, und/oder den Detektorkörper (30; 205) um die zweite horizontale Achse (34, 209) mit einer Hin- und Herbewegung zwischen zwei Endpositionen zu rotieren, um ein vorgegebenes Sichtfeld in einer vertikalen Ebene abzudecken,
- in einem zweiten Betriebsmodus:
den Gelenkarm (32, 201) um die erste vertikale Achse (44; 202) in einer vorbestimmten Position auszurichten und/oder den Detektorkörper (32; 205) um die zweite horizontale Achse (34; 209) in einer vorbestimmten Position auszurichten, um die Videokamera (206) und den IR-Visor (208) in eine vorbestimmte Blickrichtung auszurichten,
- wobei die mehreren elektronischen Steuerungen (E), die mit jeder Detektionsvorrichtung verbunden sind, ferner elektronische Schaltkreise (210, 211) zur Verarbeitung der von der Videokamera (206) und dem IR-Visor (208) ausgesendeten Signale und zur Stabilisierung des auf der Basis der Signale erhaltenen Bildes im Falle von Bewegungen und/oder Vibrationen umfassen, die während der Fahrt von dem Fahrzeug verursacht werden,
- wobei das Detektionssystem nur aus der Vielzahl von Detektionsvorrichtungen (2) besteht, ohne irgendwelche Lidar-Sensoren, ohne irgendwelche Radar-Sensoren und ohne irgendwelche Ultraschall-Sensoren,
- und wobei die Anzahl der Detektionsvorrichtungen (2) vier beträgt und diese umfassen:
- zwei Frontdetektionsvorrichtungen (2), die in einem Frontbereich des Fahrzeugs jeweils auf der rechten und linken Seite angeordnet sind,
- zwei Heckdetektionsvorrichtungen (2), die in einem Heckbereich des Fahrzeugs jeweils auf der rechten und linken Seite angeordnet sind,
- wobei das Fahrzeug ferner umfasst:
- eine elektronische Frontbereichssteuerung (S1), welche die beiden Frontdetektionsvorrichtungen (2) zur Verarbeitung von Frontsichtdaten steuert,
- eine elektronische Heckbereichssteuerung (S2), welche die beiden Heckdetektionsvorrichtungen (2) zur Verarbeitung von Hecksichtdaten steuert,
- eine elektronische rechte Seitenbereichssteuerung (S3), welche die rechte Frontdetektionsvorrichtung (2) und die rechte Heckdetektionsvorrichtung (2) steuert,
- eine elektronische linke Seitenbereichsteuerung (S4), welche die linke Frontdetektionsvorrichtung (2) und die linke Heckdetektionsvorrichtung (2) steuert, um Sichtdaten für die linke Seite zu verarbeiten,
- eine elektronische Überwachungssteuerung (S5), welche zum Steuern der Frontbereichssteuerung (S1), der Heckbereichssteuerung (S2), der rechten Seitenbereichssteuerung (S3) und der linken Seitenbereichssteuerung (S4) ausgebildet ist,
wobei jede Bereichssteuerung (S1-S4) in der Lage ist, stereoskopische dreidimensionale Sichtdaten bereitzustellen, und
wobei das Fahrzeug als Elektroauto mit autonomem Antrieb ausgebildet ist und die vier Detektionsvorrichtungen (2) an der rechten vorderen, linken vorderen, rechten hinteren und linken hinteren Ecke eines Fahrzeugdachs (3) vorgesehen sind.

2. Elektrofahrzeug nach Anspruch 1, **dadurch gekennzeichnet, dass** die Kommunikation der an Bord des Fahrzeugs mit autonomem Antrieb angeordneten elektronischen Steuerungen untereinander und/oder mit entfernten Kommunikationsvorrichtungen Informationssicherheitstechniken basierend auf einer Quantenschlüsselverteilung verwendet.

3. Elektrofahrzeug nach Anspruch 1, **dadurch gekennzeichnet, dass** die Gruppe von Steuerungen ausgebildet ist, redundante Navigationsdaten basierend auf einer Analyse eines innerhalb der das Fahrzeug umgebenden Umgebung detektierten optischen Flusses bereitzustellen.

## Revendications

1. Véhicule électrique, à conduite autonome, ayant une ou plusieurs roues de traction et une ou plusieurs roues directrices, au moins un moteur électrique de traction pour entraîner les roues motrices et au moins un moteur électrique de direction pour entraîner la direction des roues directrices, un bloc-batterie d'alimentation, un système de détection pour détecter l'environnement entourant le véhicule et un système de commande électronique pour commander ledit au moins un moteur électrique de traction et ledit au moins un moteur électrique de direction sur la base de signaux provenant dudit système de détection,
dans lequel :
- le système de détection est constitué uniquement d'une pluralité de dispositifs de détection (2), chaque dispositif de détection comprenant :
- un support (200) monté sur le véhicule (1 ; 100)
- un poignet articulé (201) monté en pivotement sur ledit support (200) autour d'un premier axe sensiblement vertical (202),
- un corps de détecteur (205), monté en pivotement sur ledit poignet (201) autour d'un second axe sensiblement horizontal (209) orthogonal audit premier axe (202), et portant à la fois une caméra vidéo (206) pour la vision de jour et un viseur IR (208) pour la vision nocturne ou pour la vision dans des conditions de faible visibilité,
- un premier moteur électrique (51 ; M1), interposé entre ledit support (200 ; 22) et ledit poignet articulé (201 ; 32) pour entraîner une rotation du poignet articulé autour dudit premier axe (202 ; 44),
- un second moteur électrique (61 ; M2) interposé entre ledit poignet articulé (32 ; 201) et le corps (32, 205) du détecteur, pour entraîner une rotation du corps du détecteur autour dudit second axe (34 ; 209),
- un premier et un second capteur de position angulaire (58, 68), pour détecter la position angulaire du poignet articulé (32, 201) et du corps (30, 205) du détecteur,
- un ou plusieurs dispositifs de commande électroniques (E) associés à chaque dispositif de détection (2) pour recevoir un signal de sortie desdits premier et second capteurs de positions angulaires et pour actionner ledit premier moteur électrique (M1) et ledit second moteur électrique (M2),
- lesdits dispositifs de commande électroniques (E) étant programmés pour
- dans un premier mode de fonctionnement :
- faire tourner ledit poignet articulé (32, 201) autour dudit premier axe vertical (44, 202), avec un mouvement de va-et-vient entre deux positions extrêmes, de manière à couvrir un champ de vision prédéterminé dans un plan horizontal et/ou faire tourner ledit corps de détecteur (30 ; 205) autour dudit second axe horizontal (34, 209), avec un mouvement de va-et-vient entre deux positions extrêmes, de manière à couvrir un champ de vision prédéterminé dans un plan vertical,
- dans un second mode de fonctionnement :
orienter ledit poignet articulé (32, 201) autour dudit premier axe vertical (44 ; 202) dans une position prédéterminée et/ou orienter ledit corps de détecteur (32 ; 205) autour dudit second axe horizontal (34 ; 209) dans une position prédéterminée, de manière à orienter ladite caméra vidéo (206) et ledit viseur IR (208) dans une direction de vision prédéterminée,
- dans lequel lesdits un ou plusieurs dispositifs de commande électroniques (E) associés à chaque dispositif de détection comprennent en outre des circuits électroniques (210, 211) pour traiter des signaux émis par ladite caméra vidéo (206) et ledit viseur IR (208) et pour stabiliser l'image obtenue sur la base desdits signaux en cas de mouvements et/ou de vibrations transmis par le véhicule pendant le déplacement,
- dans lequel le système de détection est constitué uniquement par ladite pluralité de dispositifs de détection (2), sans aucun capteur lidar, sans aucun capteur radar et sans aucun capteur à ultrasons,
- et dans lequel lesdits dispositifs de détection (2) sont au nombre de quatre et comprennent :
- deux dispositifs de détection avant (2) agencés au niveau d'une zone avant du véhicule, respectivement sur les côtés droit et gauche,
- deux dispositifs de détection arrière (2) agencés au niveau d'une zone arrière du véhicule, respectivement sur les côtés droit et gauche,
- ledit véhicule comprenant en outre :
- un dispositif de commande électronique de zone avant (S1) qui commande les deux dispositifs de détection avant (2) pour traiter des données de vision avant,
- un dispositif de commande électronique de zone arrière (S2) qui commande les deux dispositifs de détection arrière (2) pour traiter des données de vision arrière,
- un dispositif de commande électronique de zone côté droit (S3) qui commande le dispositif de détection avant droit (2) et le dispositif de détection arrière droit (2),
- un dispositif de commande électronique de zone côté gauche (S4), qui commande le dispositif de détection avant gauche (2) et le dispositif de détection arrière gauche (2), pour traiter les données de vision côté gauche,
- un dispositif de commande électronique superviseur (S5) qui est configuré pour commander ledit dispositif de commande de zone avant (S1), ledit dispositif de commande de zone arrière (S2), ledit dispositif de commande de zone côté droit (S3) et ledit dispositif de commande de zone côté gauche (S4),
chaque dispositif de commande de zone (S1-S4) étant capable de fournir des données de vision tridimensionnelle stéréoscopique, et
dans lequel le véhicule est configuré comme une voiture à moteur électrique à conduite autonome et les quatre dispositifs de détection (2) sont prévus aux coins avant droit, avant gauche, arrière droit et arrière gauche d'un toit de véhicule (3).

2. Véhicule électrique selon la revendication 1, **caractérisé en ce que** la communication des dispositifs de commande électroniques situés à bord du véhicule à conduite autonome, entre eux et/ou avec des dispositifs de communication distants, fait appel à des techniques de sécurité de l'information basées sur la distribution quantique de clés.

3. Véhicule électrique selon la revendication 1, **caractérisé en ce que** le groupe de dispositifs de commande est configuré pour fournir des données de navigation redondantes basées sur une analyse d'un flux optique détecté dans l'environnement entourant le véhicule.
